# EUROPEAN PATENT APPLICATION

(11) **EP 2 505 432 A1**
(43) Date of publication of application: **03.10.2012**
(21) Application number: 11305361.5
(22) Date of filing: 31.03.2011
(51) Int. Cl.: B60Q 5/00

(54) **Altert system for wheeled vehicles**

(71) Applicant: Alcatel Lucent, 75007 Paris (FR)
(72) Inventor: Klumpp, Dieter, 70193, Stuttgart (DE); Fechner, Rainer, 12555, Berlin (DE)
(74) Representative: Wetzel, Emmanuelle

(57) **Abstract**

An alert system for a wheeled vehicle comprising a microphone (22) for generating an audio signal based on rolling noise produced by a wheel (21) of the vehicle, an amplifier (23) for amplifying the audio signal, and a loudspeaker (24) for producing sound in response to the amplified audio signal. Corresponding method of alerting a pedestrian (25) of an approaching wheeled vehicle.

## Description

### Field of the invention

The invention relates to an alert system fr wheeled vehicles.

This section introduces aspects that may be helpful in facilitating a better understanding of the invention. Accordingly, the statements of this section are to be read in this light and are not to be understood as admissions about what is in the prior art or what is not in the prior art.

In the field of warning systems, electric vehicle warning sounds are a series of sounds designed to alert pedestrians to the presence of electric drive vehicles such as hybrid electric vehicles (HEVs), plug-in hybrid electric vehicles (PHEVs), and all-electric vehicles (EVs) travelling at low speeds. Since vehicles operating in all-electric mode generate less noise than traditional combustion engine vehicles, they can make it more difficult for pedestrians, the blind, and others, to become aware of their presence.

A conventional electric vehicle warning sound may be produced by emitting a series of warning chirps or low tones from the vehicle horn, enough to provide an alert but not to startle. Some advanced systems are configured to project such warning sound in the direction of travel.

### Summary

In one embodiment of the present invention, an alert system is disclosed which may allow for reduced noise pollution. In this context, noise pollution is any excessive, displeasing machine-created environmental noise that disrupts the activity or balance of human or animal life.

In another embodiment of the present invention, a method is disclosed that may be applied to alert a nearby pedestrian of an approaching wheeled vehicle to make him or her aware of its presence. In the field of transport, a wheeled vehicle is any land vehicle that is designed or used to transport people or cargo and that employs a wheel or wheels to apply steering and driving forces against the ground. A wheel in turn is any device that allows heavy objects to be moved easily through rotating on an axle through its center, facilitating movement or transportation while supporting the load imposed by the vehicle.

An alert system according to an embodiment of the invention comprises a microphone. Herein, a microphone is any acoustic-to-electric transducer or sensor that converts sound into an electrical signal. The resulting signal is commonly referred to as an audio signal, that is, a representation of sound pressure waves in a different form. Typically, the audio signal would take the form of a time-varying electrical voltage or current, but may as well be based on radio frequency waves, when broadcast through radio, or even pulses of light, when transmitted through a fiber optic cable such as TOSLINK. In this embodiment, the microphone is arranged to generate its audio signal based on rolling noise produced by a wheel of the vehicle.

Such alert system further comprises an amplifier, that is, a device for increasing the power of the audio signal. In the embodiment at hand, the audio signal being an electrical signal, the amplifier takes the form of an electronic amplifier. To obtain the desired effect, the amplifier controls its output to match the input signal shape while increasing its amplitude. In this context, this amplitude is proportional to the change in atmospheric pressure, whose oscillation constitutes the rolling noise.

Finally, the alert system comprises a loudspeaker, sometimes called a speaker, that is, an electro-acoustic transducer that produces sound in response to an electrical audio signal input. In the present embodiment, the audio signal output of the amplifier constitutes the audio signal input of the loudspeaker. To adequately reproduce the potentially wide range of frequencies characterizing the rolling noise, the loudspeaker may employ more than one transducer, commonly called a driver in this context.

A method of, according to another embodiment of the invention, alerting a pedestrian of an approaching wheeled vehicle comprises the initial step of generating an audio signal that is based on rolling noise which in turn is produced by a wheel of the vehicle. The resulting audio signal then is amplified and, ultimately, sound is produced in response to this amplified audio signal.

Further embodiments of the invention can be gathered from the following entirety of the herein application.

### Brief Description of the Figures

Some embodiments of apparatus and/or methods in accordance with embodiments of the present invention are now described, by way of example only, and with reference to the accompanying drawings, in which:

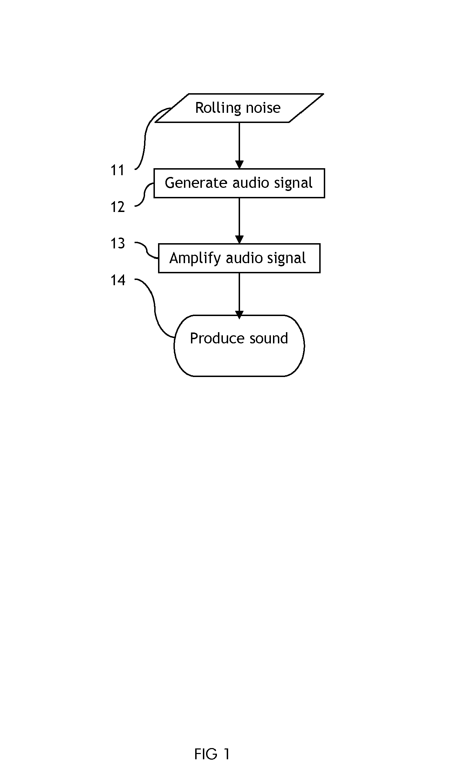

Figure 1 is a flowchart of a method according to an embodiment of the present invention; and

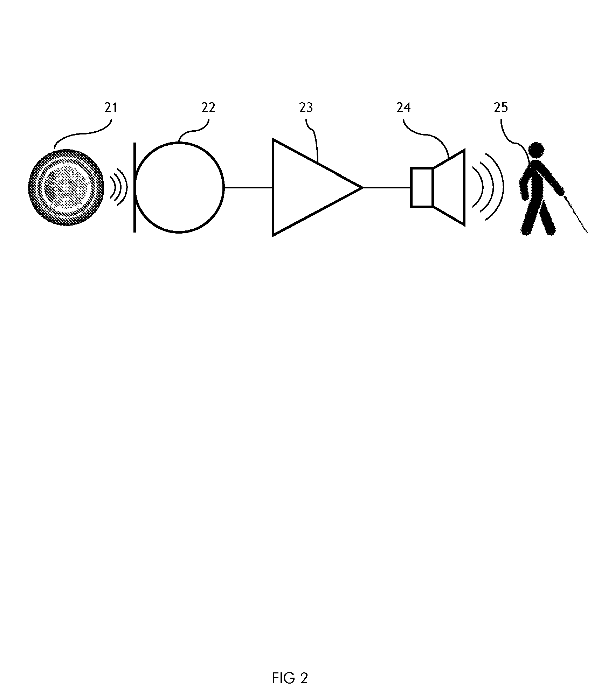

Figure 2 is a block diagram of an alert system according to another embodiment of the present invention.

### Description of the Embodiments

In a first step 11, rolling noise is produced by a wheel 21 of the vehicle. Here, rolling noise is any noise caused by friction between the wheel 21 or its tires and the pavement underneath. Typically, such rolling noise takes the form of a deeply resounding, reverberant hum. For the purpose of this embodiment, its volume is expected to be highly dependent on pavement surface treatment. For instance, a chip-seat paved road would generally, but not imperatively, lead to a higher sound level than asphalt or cement concrete. Similarly, the amount of rolling noise produced by currently marketed tires varies greatly. In the context of road vehicles, a tire is any ring-shaped covering that fits around the wheel rim, that is, the wheel's outer circular design, usually to protect it or enable better vehicle performance by providing a flexible cushion that absorbs shock while keeping the wheel 21 in close contact with the ground.

In a second step 12, a microphone 22 generates an audio signal based on the rolling noise of the first step 11. To this end, the microphone 22 of the current embodiment uses electromagnetic induction, capacitance change, piezoelectric generation, or light modulation from mechanical vibration caused by the rolling noise. Preferably, but not necessarily, the microphone 22 is mounted near a fender or fender skirt of the vehicle, such as in the wheel well framed by such fender, or attached to some other panel in proximity of the wheel arches. In the case of a human-powered vehicle such as a bicycle, the microphone 22 may be integrated with a dynamo, which in turn can be used to power the amplifier 23.

To suppress any background noise caused by interference factors such as airflow through the wheel well, the directional characteristics of the microphone 22 may be adapted according to its relative position to the pavement-facing side of the wheel 21. Furthermore, to eliminate the need for physical cabling of the microphone 22 to connect it to its associated amplifying equipment, the microphone 22 may take the form of a wireless microphone, also known as a radio microphone, containing a radio transmitter. Such wireless setup is particularly beneficial where the embodiment is designed for retrofitting or upgrading a conventional vehicle.

For ease of integration with conventional amplifying equipment, the audio signal generated in the second step 12 may take the form of an electrical voltage signal. The microphone sensitivity, in this case usually expressed in millivolts per pascal, preferably is selected according to the expected rolling noise level.

In a third step 13, an amplifier 23 amplifies the audio signal generated in the second step 12. To cater for the frequency range of the audio signal, the amplifier 23 takes the form of an audio amplifier, sometimes called audio-frequency amplifier, that is, an electronic circuit for amplification of signals within, and in some cases above, the audible range of frequencies. This range is commonly called the bandwidth of the amplifier 23. In the embodiment at hand, to reflect the range of normal human hearing as may be imputed to a pedestrian 25, the amplifier 23 is adapted to perform satisfactorily for frequencies between 20 Hz and 20 kHz. To avoid disrupting the activity or balance of animal life, the amplifier 23 may employ input and/or output filtering to sharply limit frequency responses beyond this range. Such filtering bears the additional advantage of reducing the waste of output power on infrasonic and ultrasonic frequencies.

To integrate the amplifier 23 with an external control unit, the former may take the form of a programmable gain amplifier (PGA), that is, an electronic amplifier whose gain can be controlled by external digital or analog signals. In electronics, gain is a measure of the ability of a circuit―here, the amplifier―to increase the power or amplitude of a signal from its input to its output. The associated control unit may be connected, inter alia, to a tachometer of the vehicle. In the field of measuring instruments, a tachometer, sometimes called revolution counter, is any instrument that measures the rotation speed of a shaft or disk, as in a motor or other machine. In this scenario, the tachometer may be configured to measure the rotation speed of the wheel 21 and deactivate the amplifier 23 in response to that speed exceeding a predetermined threshold. Typically, such threshold would correspond to a traveling speed of the vehicle between 32 and 40 km/h at which normal motion and rotation noises become audible, such as produced by the road, suspension, and, where applicable, motor. To this end, the tachometer may be mounted on the rear of the transmission and designed to deliver a series of electronic pulses whose frequency corresponds to the rotational speed of the driveshaft. In the case of a motor vehicle, an alternative embodiment may rely on, for example, pulses originating from the anti-lock braking system (ABS) wheel sensors. A similar effect may be achieved by coupling the control unit with a positional speedometer based on a global positioning system (GPS) device. Subject to regulatory requirements, an advanced embodiment may further allow an operator of the vehicle to manually control the amplifier 23.

Finally, in a fourth step 14, a loudspeaker 24 produces sound in response to the audio signal amplified in the third step 13. To limit noise pollution within the vehicle's passenger compartment to a minimum, the loudspeaker 24 is positioned near an opening in the vehicle body. To protect the loudspeaker 24 and other subassemblies of the vehicle, this opening is covered by a grille, that is, an arrangement in the vehicle body of several slits side by side. Where the vehicle features a combustion engine, such grille may double as a radiator grille.

Preferably, the loudspeaker 24 employs a woofer, that is, a driver designed to produce sounds in the approximate range of 40 Hz to 1 kHz or higher, to emphasize the typically low frequency of the rolling noise. To further reduce noise pollution by projecting the sound only in the direction of travel of the vehicle, the loudspeaker 24 may make use of directional sound, that is, create fields of sound spreading less than would be expected in most traditional loudspeakers. To this end, reflecting the characteristic forward motion of the vehicle, the grille is preferably located at the front of the vehicle such as, in the case of an automobile, below a front bumper, adjacent to an engine hood, or near the front fender. An improved vehicle featuring an optional reverse gear may comprise an additional loudspeaker at its tail, such as on a rear deck lid. For optimum directivity even in the case of the relatively low frequency spectrum inherent to the rolling noise, the loudspeaker preferably forms part of a dimensionally large speaker panel, speaker array, or dome. In the case of a speaker array, all speakers would then be driven together in phase to obtain a sound source with equivalent directivity to a single large loudspeaker. Alternatively to a line array, that is, an arrangement coupled together in a line segment to create a near-line source of sound, the drivers may be arrayed on a parabolic surface, constituting what is known in the field of loudspeaker technology as a parabolic loudspeaker. Due to reduced dissipation in air, the resulting beam of sound may travel farther, thus being able to focus on distant pedestrians 25 to alert them of the approaching vehicle in good time before the latter passes their position. Yet another embodiment may achieve a similar effect by reflecting sound output from the loudspeaker 24 to a parabolic reflector aimed in the direction of travel.

Due to its typically quiet and smooth operation, resulting in reduced noise and vibration, an electric vehicle may particularly benefit from an alert system as described above. In this context, an electric vehicle (EV), also referred to as an electric drive vehicle, is any vehicle that uses one or more electric motors for propulsion. Examples of electric wheeled vehicles include, but are not limited to, electric cars, electric buses, electric trucks, electric motorcycles, and electric trains. In the specific case of a hybrid electric vehicle (HEV) combining a conventional internal combustion engine (ICE) with an electric propulsion system, the amplifier may be configured to deactivate whenever the ICE is engaged, as the operating noise inherent to the ICE would typically redundantize any further warning sound.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. An alert system for a wheeled vehicle comprising a microphone (22) for generating an audio signal based on rolling noise produced by a wheel (21) of the vehicle, an amplifier (23) for amplifying the audio signal, and a loudspeaker (24) for producing sound in response to the amplified audio signal.

2. An alert system as in claim 1 wherein the microphone (22) is adapted for mounting in a wheel well of the vehicle.

3. An alert system as in claim 1 wherein the microphone (22) is adapted for attachment to a fender of the vehicle.

4. An alert system as in any of the preceding claims wherein the amplifier (23) takes the form of a programmable gain amplifier.

5. An alert system as in claim 4 further comprising a control unit for controlling a gain of the programmable gain amplifier.

6. An alert system as in claim 5 wherein the control unit is adapted for connection to a tachometer of the vehicle, wherein the tachometer is configured to measure a rotation speed of the wheel (21).

7. An alert system as in claim 6 wherein the control unit is configured to deactivate the amplifier (23) in response to the rotation speed exceeding a threshold.

8. An alert system as in claim 7 wherein the threshold corresponds to a traveling speed of between 32 km/h and 40 km/h.

9. An alert system as in any of claims 5 to 8 wherein the control unit comprises a manual control element configured for use by an operator of the vehicle.

10. An alert system as in any of the preceding claims wherein the vehicle takes the form of an electric vehicle.

11. An alert system as in claim 10 wherein the electric vehicle takes the form of a hybrid electric vehicle and the amplifier (23) is configured for deactivation in response to engagement of a combustion engine of the vehicle.

12. An alert system as in any of claims 1 to 9 wherein the vehicle takes the form of a bicycle.

13. An alert system as in any of the preceding claims wherein the amplifier (23) is adapted for connection to a dynamo of the vehicle.

14. A wheeled vehicle comprising an alert system according to any of the preceding claims.

15. A method of alerting a pedestrian (25) of an approaching wheeled vehicle, which method comprises the steps of generating (12) an audio signal based on rolling noise produced (11) by a wheel of the vehicle, amplifying (13) the audio signal, and producing sound (14) in response to the amplified audio signal.
